# EUROPEAN PATENT APPLICATION

(11) **EP 1 826 487 A2**
(43) Date of publication of application: **29.08.2007**
(21) Application number: 07101999.6
(22) Date of filing: 08.02.2007
(51) Int. Cl.: F23J 13/04, F23L 11/00

(54) **Flue gas discharge device for boilers**

(30) Priority: 28.02.2006 IT BG20060009
(71) Applicant: Groppalli S.r.l., 29010 Gragnano Trebbiense (PC) (IT)
(72) Inventor: Groppalli, Luciano, 29010 Gragnano Trebbiense (PC) (IT)
(74) Representative: Giavarini, Francesco

(57) **Abstract**

A flue gas discharge device for boilers comprising a first tubular element provided with a first flue gas inlet section and a second flue gas outlet section and comprising an internal duct which delimits an internal volume; the internal duct is provided with a first and a second end respectively in communication with the first and the second section and defining, with the internal wall of the first tubular element, a chamber with a closed bottom. The device also comprises a second tubular element at least partly overlapped with the internal duct and comprising lateral walls which extend around the internal duct and divide the chamber into two portions communicating with each other at the level of the bottom of the chamber; the internal portion is in communication with the internal volume of the internal duct, while the external portion is in communication with the second section of the first tubular element; the second tubular element is provided with a first opening interposed between the second section of the first tubular element and the second end of the internal duct. The device further comprises means for closing the first opening of the second tubular element.

## Description

The present invention relates to a flue gas discharge device for boilers, in particular for condensing boilers. The device according to the invention is suitable for application in systems constituted by a plurality of boilers, in particular condensing boilers, operating in batteries and connected to a single main flue gas discharge pipe.

Producing systems comprising a plurality of boilers operating in batteries is known, as in this way it is possible to optimize management of the system. In practice, instead of having a single high power boiler it is often preferable to divide the installed thermal power using a plurality of boilers operating separately, in order to economize on management of the system. The various boilers are generally installed side by side and are connected to the same main flue gas discharge pipe, positioned transversely above the boilers, through vertical discharge pipes. Besides having a suitable diameter as a function of the number and power of the boilers installed, the main pipe usually slopes downwards to facilitate collection and discharge of condensate water.

This type of system has some problems linked to the fact that the boilers can also operate individually. In fact, in this case at least part of the flue gases coming from the boilers in use tends to flow into the flue pipes of the boilers that are not in use, and consequently into the environment in which the boilers are housed. This situation is naturally unacceptable, and it is therefore necessary to provide discharge devices for the boilers that allow gases to be delivered from the boiler towards the main pipe when the boiler is in use and that prevent gases from entering the boiler, and therefore the surrounding environment, from the main pipe when the boiler is not in use.

A further problem lies in the fact that part of the condensate water can penetrate the vertical flue pipe of the boiler, and therefore measures must be taken to eliminate it.

Moreover, as the boilers are usually positioned at the same height and as the main pipe is sloped downwards, the respective distances between each boiler and said pipe are usually different. It is therefore necessary to provide vertical discharge pipes from the boiler to the main pipe of different lengths as a function of the position of the boiler.

On the basis of these considerations, the main aim of the present invention is to provide a flue gas discharge device for boilers, in particular for condensing boilers, which makes it possible to overcome the aforesaid drawbacks.

Within the scope of this aim, an object of the present invention is to provide a flue gas discharge device for boilers, in particular for condensing boilers, which allows discharge of flue gases when the boiler is in use, but prevents return of flue gases from the main pipe when the boiler is not in use.

Another object of the present invention is to provide a flue gas discharge device for boilers, in particular for condensing boilers, which allows elimination of at least part of the condensate water that forms inside the discharge ducts.

Yet another object of the present invention is to provide a flue gas discharge device for boilers, in particular for condensing boilers, which is easy to access and perform maintenance on.

A further object of the present invention is to provide a flue gas discharge device for boilers, in particular for condensing boilers, which is easily adaptable as a function of the distance between the boiler and the main discharge pipe.

One more object of the subject matter of the present invention is to provide a flue gas discharge device for boilers, in particular for condensing boilers, which is highly reliable, relatively easy to produce and at competitive costs.

Thus, the present invention relates to a flue gas discharge device for boilers, in particular for condensing boilers; to a flue gas discharge of the invention comprises a first tubular element which has a first flue gas inlet section and a second flue gas outlet section and comprises an internal duct; said internal duct delimits an internal volume and has a first and a second end respectively in communication with said first and second section and defines with the internal wall of the first tubular element a chamber with a closed bottom. The device according to the invention also comprises a second tubular element which is at least partly overlapped with the internal duct and comprises lateral walls which extend around said internal duct and divide said chamber into two portions, respectively external and internal, communicating with each other at the level of the bottom of said chamber; the internal portion of said chamber is in communication with the internal volume of the internal duct, while the external portion is in communication with the second section of the first tubular element. The second tubular element also has a first opening interposed between the second section of the first tubular element and the second end of the internal duct. Finally, the device according to the invention comprises means for closing said first opening of the second tubular element.

In other words, the flue gas discharge device for boilers, in particular for condensing boilers, according to the invention, is characterized in that it comprises a first tubular element having a first flue gas inlet section and a second flue gas outlet section and comprising an internal volume for passage of flue gases; said internal volume has a first and a second end respectively in direct communication with said first and second section. The first tubular element also comprises a siphon chamber communicating indirectly between said internal volume and said second flue gas outlet section. Finally, the device comprises means for closing direct communication between said internal volume and the second flue gas outlet section.

In practice, in operating conditions the closing means are kept open due to the flow of flue gases delivered from the boiler, while the condensate water collects in the siphon chamber. If excessive water is present, this is discharged through the internal volume for passage of flue gases, according to a mechanism that will be illustrated in detail hereunder. If the boiler is not in use, the closing means are kept closed as a result of the overpressure generated by the flue gases present in the main discharge pipe, preventing direct access of the flue gases from the main pipe to the internal volume of the device; indirect entry of flue gases to the internal volume through the siphon chamber is instead prevented by the presence of water in the siphon chamber.

Further characteristics and advantages of the invention will be more apparent from the description of preferred, although not exclusive, embodiments of the flue gas discharge device for boilers, in particular for condensing boilers, according to the invention, illustrated by way of a non-limiting example in the accompanying drawings, wherein:
- Figure 1 is a sectional view of an embodiment of the flue gas discharge device according to the invention;
- Figure 2 is a sectional view of a first element of the flue gas discharge device in Figure 1;
- Figure 3 is a sectional view of a second element of the flue gas discharge device in Figure 1;
- Figures 4A, 4b are respectively a front view and a top view of a system comprising a plurality of boilers connected to a main discharge pipe through one or more devices according to the invention.

With reference to the aforesaid figures, the flue gas discharge device 1 for boilers 3, and in particular for condensing boilers, comprises a first tubular element 10 which has a first flue gas inlet section 11 and a second flue gas outlet section 12. The first section 11 is in communication with a boiler, while the second section 12 is in communication with a main flue gas discharge pipe 4. The first tubular element 10 comprises an internal duct 13 which delimits an internal volume 131; said internal duct 13 has a first 132 and a second 133 end, respectively in communication with said first 11 and second section 12 of the tubular element. Moreover, the internal duct 13 defines with the internal wall 101 of the first tubular element 10 a chamber 14 with closed bottom, the function of which will be illustrated hereunder.

The device according to the invention also comprises a second tubular element 20 which is at least partly overlapped with the internal duct 13; said second tubular element 20 comprises lateral walls 21 which extend around the internal duct 13 and divide the chamber 14 into two portions, respectively external 141 and internal 142, communicating with each other at the level of the bottom 143 of said chamber. The internal portion 142 is in communication with the internal volume 131 of the internal duct 13, while the external portion 141 is in communication with the second section 12 of the first tubular element 10. In this way, an indirect siphon communication path is produced between the internal volume 131 and the second outlet section 12, through the chamber 14.

The second tubular element 20 also has a first opening 22 which is interposed between the second section 12 of the first tubular element 10 and the second end 133 of the internal duct 13.

At the level of the first opening 22, there are positioned closing means 30, in this case constituted by a cover hinged in proximity of the edge of the opening 22.

According to an advantageous embodiment, the second tubular element 20 is fitted on the internal duct 13 so as to define, at the level of the second end 133 of said internal duct 13, a plurality of openings 150 in communication between the internal volume 131 of the duct 13 and the internal portion 142 of the chamber 14 that constitutes one of the branches of the siphon.

Preferably, the first tubular element 10 comprises a cylindrical body in which the first flue gas inlet section 11 has a smaller diameter than the second flue gas outlet section 12; in the embodiments illustrated, the two sections 11 and 12 are connected at the level of the bottom 143 of the chamber 14. In this case, the internal duct 13 advantageously comprises a cylindrical body substantially coaxial with the first 11 and second 12 section of the first tubular element 10. According to this embodiment, the second tubular element (20) is also produced to comprise a cylindrical body with an intermediate diameter between the diameter of the second section 12 and the diameter of the internal duct 13. In this case, as is apparent from the figures, the chamber 14 has an annular structure, in which there is defined is a siphon path by means of the external wall of the central duct 13, the lateral walls of the second tubular element 20, and the internal wall 101 of the first tubular element 10.

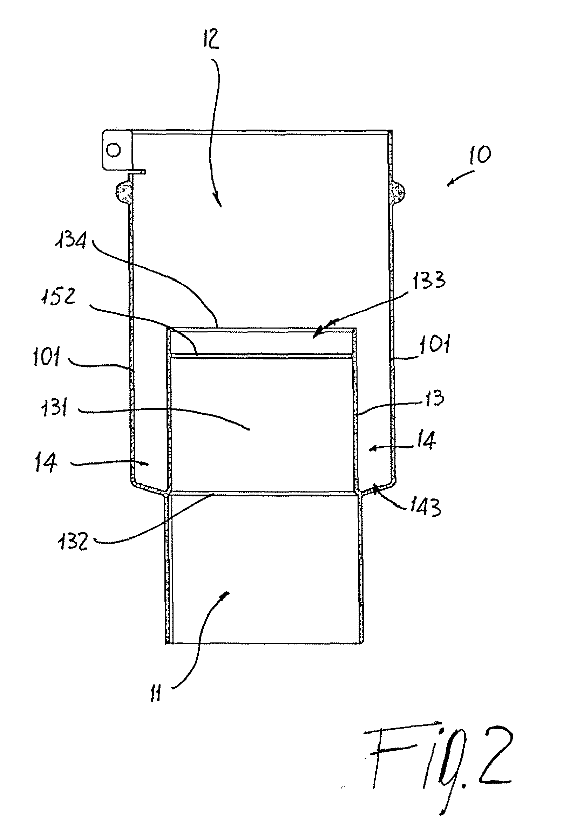

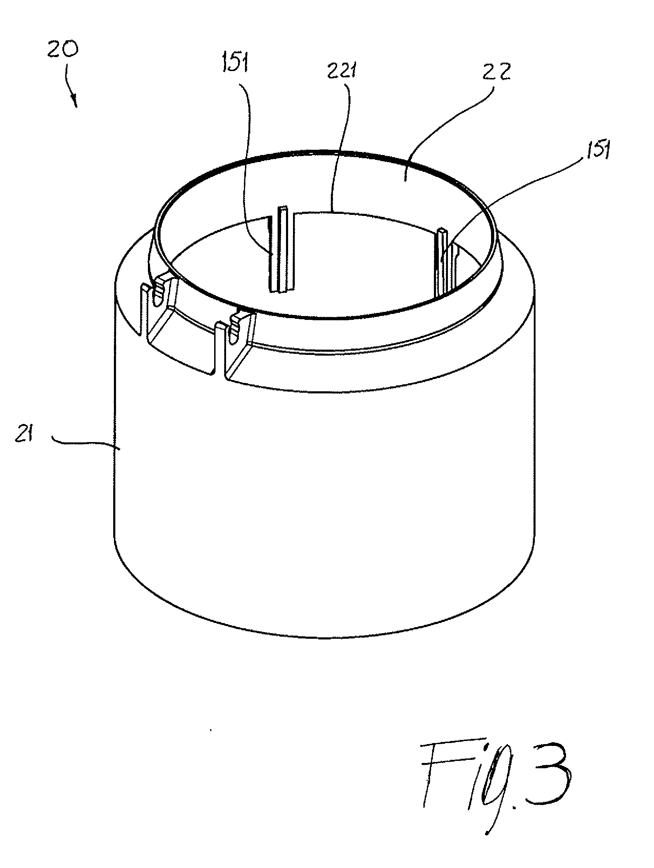

The first and the second tubular element 10, 20 can be produced in a single body or, more practically and advantageously, as two separate elements, represented respectively in Figures 2 and 3. In order to facilitate reciprocal connection, the second tubular element 20 can comprise one or more means 151 for coupling on the internal duct 13 of the first element 10.

Advantageously, the internal duct 13 can also comprise means 152 for connection with said coupling means 151. In the embodiment represented in the accompanying figures, said coupling means 151 comprise a plurality of tabs which couple to the inside of the central duct 13 of the first element 10. Inside the duct 13 there are provided means for connection with the tabs, in this case constituted by a ring that cooperates with a shaped surface of the tabs 151, helping to hold the second element 20 in a predetermined position.

In the embodiment represented in the accompanying figures, the internal edge 221 of the first opening 22 of the second tubular element 20 remains at a distance from the external edge 134 of the second end 133 of the internal duct 13. In this way, a series of slots 150 are produced in proximity to the second end 133 of the duct 13, which place the internal volume 131 of the duct 13 in communication with one of the branches of the siphon chamber, constituted in this case by the internal portion 142 of the chamber 14.

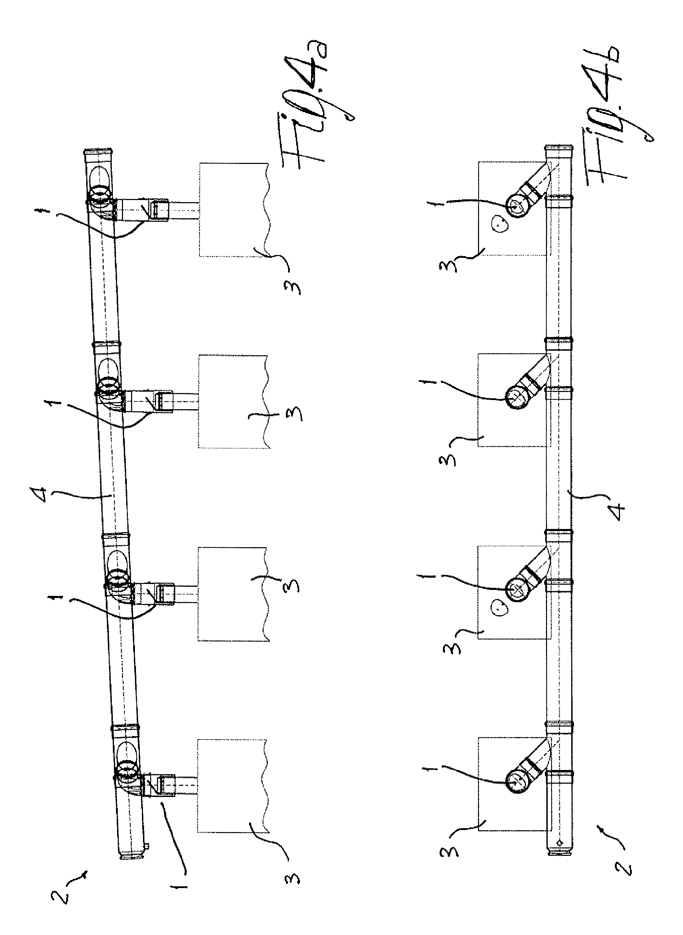

The operating principle of the flue gas discharge device for boilers according to the invention is immediately and easily understood. With reference to Figures 4a and 4b, these show a typical example of a system constituted by a plurality of boilers 3 positioned side by side. The main flue gas discharge pipe 4 is positioned above the boilers, usually with an appropriate downward slope to allow recovery and discharge of the condensate water. The boilers 3 are connected to the main pipe 4 through a vertical discharge pipe, positioned on which is the discharge device according to the invention. In the case represented in the figure, coupling takes place at the level of a lateral portion of the main pipe 4. Other solutions, i.e. with coupling taking place at the level of an inferior portion of the main pipe 4, are naturally possible.

When one of the boilers is in use, the pressure generated by the flue gases delivered from the boiler through the first section 11 and the central duct 13 determines opening of the cover 30 hinged to the second tubular element 20. The device according to the invention has the considerable advantage that the width of the opening is automatically adjusted by the pressure differential of the flue gases delivered from the boiler 3 with respect to the pressure value of the flue gases in the main pipe 4. In practice, the cover 30 can be opened to a greater or lesser extent as a function of the operating rate of the boiler 3 and of the pressure existing in the main pipe 4.

When the boiler is not in use, the overpressure that is generated in the outlet section 12 with respect to the inlet section 11 helps to keep the cover 30 closed, preventing flue gases from the main pipe from entering the boiler and consequently the surrounding environment. The condensate water collects on the bottom 143 of the chamber 14 and accumulates in the two portions 141 and 142 of the chamber constituting the two branches of the siphon, preventing gases from passing though the openings 150.

In practice, the height of the water column in the first and second portion 141, 142 is balanced as a function of the pressure differential between the outlet section 12 and the internal volume 131. Naturally, the longer the branches of the siphon are, the higher the hydrostatic head that is created will be, and consequently the higher the conditions of overpressure that can be counteracted will be; positioning of the openings 150 can therefore be selected as a function of the conditions of overpressure to be counteracted and as a function of the accumulation of water to be obtained on the bottom of the chamber. In the case of excessive quantities of water present, this is automatically discharged from the second portion 142 of the chamber 14 by transfer into the central duct 13.

Therefore, during operation of the boiler there is direct communication between the internal volume 131 and the outlet section 12 of the tubular element, and consequent discharge of the flue gases into the main pipe 4. When, instead, the boiler is not in use direct communication is closed as a result of external overpressure exerted on the cover 30; simultaneously, the siphon chamber 14 allows the condensate water to be collected and discharged through the openings 150 preventing indirect passage of flue gases from the second section 12 to the internal volume 131 of the duct 13.

As can be seen from Figure 4a, the boilers are normally mounted at the same height; as the main pipe 4 normally slopes downwards, the boilers are located at a different distance from the pipe 4. As mentioned, this can cause problems during installation as it is necessary to provide measures that compensate for the different heights required to connect the boilers 3 to the main pipe 4.

For this purpose, the flue gas discharge device according to the invention can advantageously comprise a third tubular element 40 which is mounted slidingly on the first tubular element 10. In this case it is preferable for the device 1 also to comprise means to block sliding of said third tubular element 40, such as clamps, straps and the like.

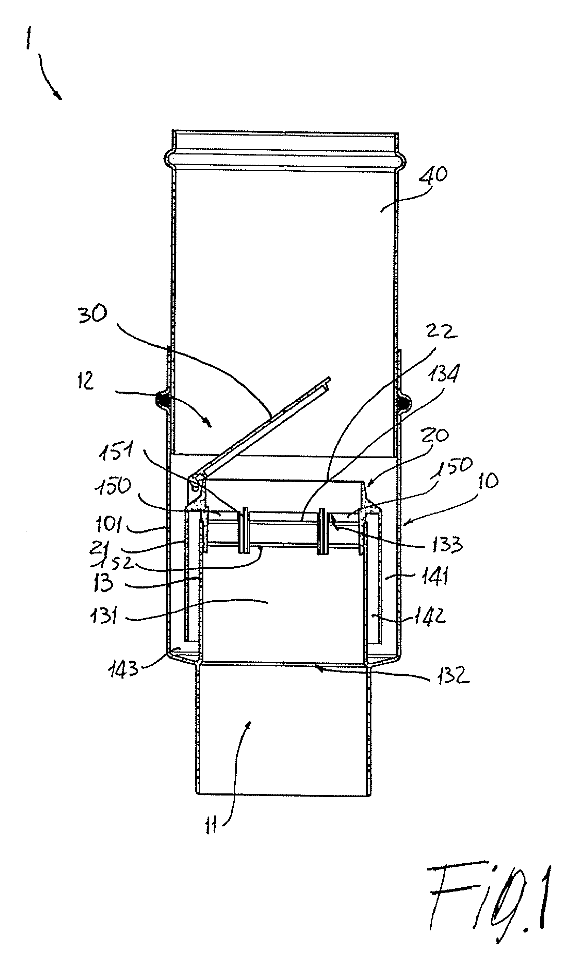

Figure 1 represents a device according to the invention, with a tubular connecting element 40 almost completely extended; during installation, extension of the element 40 can be regulated as desired as a function of the distance between the boiler 3 and the main pipe 4, considerably facilitating the work of the installer.

It has been seen how the technical solutions used allow the set aims and objects to be obtained. In particular, with the device according to the invention the degree of opening of the flue gas outlet is automatically regulated as a function of the pressure difference between the flue gas inlet and outlet sections 11 and 12. If the boiler is not in use, this opening is instead kept closed as a result of the external overpressure. Simultaneously, the condensate water is collected and discharged through the siphon chamber 14.

Moreover, the constructional characteristic of the device according to the invention allows it to be easily disassembled for cleaning and maintenance. Installation is also facilitated and quickly adaptable to different conditions in terms of distance between boiler and main pipe.

The flue gas discharge device for boilers thus conceived is susceptible to numerous modifications and variants, all falling within the scope of the inventive concept; moreover, all the details can be constituted by others technically equivalent.

In practice, the materials used and the dimensions and possible shapes can be any according to requirements and to the state of the art.

## Claims

1. Flue gas discharge device (1) for boilers (3), **characterized in that** it comprises:
- a first tubular element (10) having a first flue gas inlet section (11) and a second flue gas outlet section (12) and comprising an internal duct (13) which delimits an internal volume (131), said internal duct (13) having a first (132) and a second (133) end respectively in communication with said first (11) and second (12) section and defining with the internal wall (101) of the first tubular element (10) a chamber (14) with a closed bottom;
- a second tubular element (20) at least partly overlapped with the internal duct (13) and comprising lateral walls (21) which extend around said internal duct (13) and divide said chamber (14) into two portions, respectively external (141) and internal (142), communicating with each other at the level of the bottom (143) of said chamber, the internal portion (142) being in communication with the internal volume (131) of the internal duct (13), the external portion (141) being in communication with the second section (12) of the first tubular element (10), said second tubular element (20) having a first opening (22) interposed between the second section (12) of the first tubular element (10) and the second end (133) of the internal duct (13);
- means (30) for closing said first opening (22) of the second tubular element.

2. Device (1) according to claim 1, **characterized in that** said second tubular element (10) is fitted on the internal duct (13) and defines, at the level of the second end (133) of said internal duct (13), a plurality of openings (150) in communication between the internal volume (131) of the duct (13) and the internal portion (142) of the chamber (14).

3. Device (1) according to claim 1 or 2, **characterized in that** said first tubular element (10) comprises a cylindrical body in which the first flue gas inlet section (11) has a smaller diameter than the second flue gas outlet section (12), the two sections (11) and (12) being connected at the level of the bottom (143) of the chamber (14).

4. Device (1) according to claim 3, **characterized in that** said internal duct (13) comprises a cylindrical body substantially coaxial with the first (11) and second (12) section of the first tubular element (10).

5. Device (1) according to claim 4, **characterized in that** said second tubular element (20) comprises a cylindrical body with intermediate diameter between the diameter of the second section (12) and the diameter of the internal duct (13).

6. Device (1) according to one or more of the previous claims, **characterized in that** said second tubular element (20) comprises a plurality of coupling means (151) on said internal duct (13).

7. Device (1) according to claim 6, **characterized in that** said internal duct (13) comprises means (152) for connection with said coupling means (151).

8. Device (1) according to claim 7, **characterized in that** said coupling means (151) comprise a plurality of tabs which couple to the inside of the central duct (13), the internal edge (221) of the first opening (22) of the second tubular element (20) being distanced from the external edge (134) of the second end (133) of the internal duct (13).

9. Device (1) according to one or more of the previous claims, **characterized in that** said closing means (30) comprise a cover hinged at the level of the first opening (22) of the second tubular element (20).

10. Device (1) according to one or more of the previous claims, **characterized in that** it comprises a third tubular element (40) mounted slidingly on said first tubular element (10).

11. Device (1) according to claim 10, **characterized in that** it comprises means to block sliding of said third tubular element (40).

12. Flue gas discharge device (1) for boilers (3), **characterized in that** it comprises a first tubular element (10) having a first flue gas inlet section (11) and a second flue gas outlet section (12) and comprising an internal volume (131) for passage of flue gases, said internal volume (131) having a first (132) and a second (133) end respectively in direct communication with said first (11) and second (12) section, said first tubular element comprising a siphon chamber (14, 141, 142) for indirect communication between said internal volume (131) and said second flue gas outlet section (12), said device also comprising means (30) for closing direct communication between said internal volume (131) and the second flue gas outlet section (12).

13. Device (1) according to claim 12, **characterized in that** the first tubular element (10) comprises a cylindrical body, said internal volume being defined by a cylindrical chamber substantially coaxial with said cylindrical body and with a smaller diameter thereto, the siphon chamber (14, 141, 142) being positioned in the volume of space interposed between said cylindrical chamber and said cylindrical body.

14. System (2) for discharging flue gases from a battery of boilers (3), comprising a main flue gas discharge pipe (4) and one of more flue gas discharge devices according to one or more of claims 1 to 13.
